# EUROPÄISCHE PATENTANMELDUNG

(11) **EP 1 116 693 A1**
(43) Veröffentlichungstag der Anmeldung: **18.07.2001**
(21) Anmeldenummer: 00810927.4
(22) Anmeldetag: 10.10.2000
(51) Int. Cl.: C02F 1/48

(54) **Kombiniertes physikalisches Behandlungsverfahren für Wasser**

(30) Priorität: 18.10.1999 CH 1809399
(71) Anmelder: Thut Trading & Consulting, 3962 Montana (CH)
(72) Erfinder: Thut, Walter Kristian, 3962 Montana (CH)

(57) **Zusammenfassung**

Kombinierte physikalische Behandlung für Wasser, andere Flüssigkeiten und Gase, welche die Effekte von einer gezielten Verwirbelung mit denen der elektrophysikalischen Behandlung kombiniert. Das Gerät, das heisst auf jeden Fall der Durchflussteil (1), wird in die Leitung des Mediums installiert. Es arbeitet mit zwei Energien: erstens der kinetischen Energie des Mediums, welche durch gezielte Bewegung (mittels (2)) Energie erzeugen und abgeben kann. Zweitens mit den elektromagnetischen (Natur-) Phänomenen, auf der Molekülebene des Wassers. Die Impulse (6 und 7) werden mit Induktionsspulen übertragen (3 und 4). Dadurch kann das Wasser optimal physikalisch behandelt werden, um seine physikalischen Eigenschaften und die Wirksamkeit von im Wasser vorhandenen Stoffen zu optimieren.

## Beschreibung

### Technisches Gebiet

Es handelt sich um physikalische Behandlung von Flüssigkeiten und Gasen, im speziellen von Wasser (PWB = Physikalische Wasserbehandlung), und zwar in der Industrie, Landwirtschaft, Gewerbe, Haushalten und Verteilungsnetzen.

### Stand der Technik

Bisherige physikalische Wasserbehandlungsanlagen bestehen entweder aus Verwirbelungen, Magnetbehandlungen mit Permanentmagneten oder Induktionsspulen, Uebertragung auf sonstige Art von Informationen auf die Molekülstruktur des Wassers. Bei diesen Behandlungen, insbesondere auch den elektro-magnetischen oder Permanentmagnet- Systemen, konnten unterschiedliche Wirkungen auftreten, weil die Wasserbewegung missachtet oder bewusst vernachlässigt wurde. Die Erkenntnisse und die daraus folgenden Kombinationen von definierter Verwirbelung und elektro-magnetischer Behandlung des Wassers gemäss vorliegender Patentanmeldung sind neu.

### Detaillierte Darstellung der Erfindung

Das Verfahren wird idealerweise als eine Einheit (ein Gerät) in die Wasserleitung eingebaut. Im Gegensatz zu aussen aufmontierten Geräten wird dadurch mit definierten Dimensionen und Materialien, sowie optimal aufeinander abstimmbaren Effekten gearbeitet. Mit dem Einbau als Einheit ist auch die höchste Wirtschaftlichkeit des Verfahrens erzielbar. Bei bereits vorhandenen PWB kann durch gezielten Einbau einzelner Teile, z.B. einem Verwirbelungsteil, die Wirkung optimiert werden.

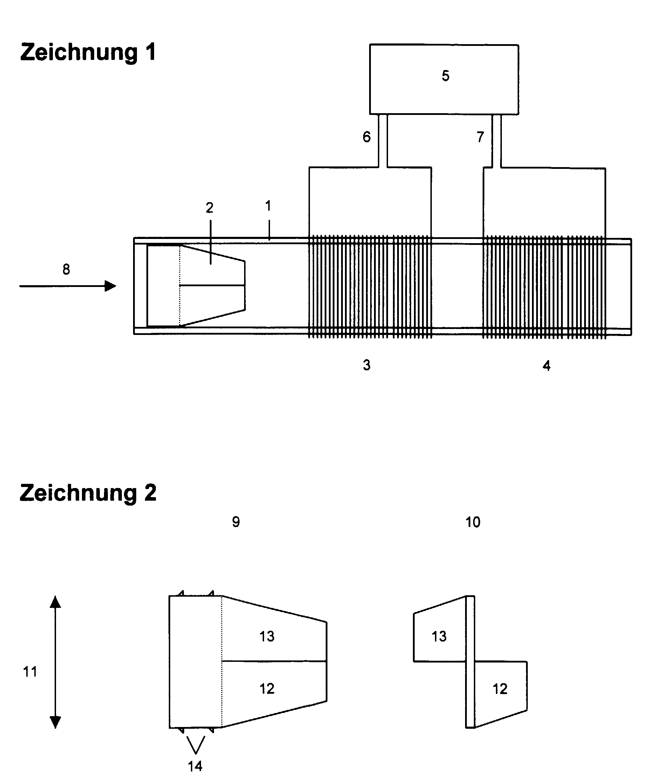

Als erstes wird eine Verwirbelung des Wassers erzeugt (z.B. gemäss Zeichnung 2) . Dies bewirkt eine Schichtung nach Temperaturen und ein Zufliessen des kalten Wasser gegen die Querschnittsmitte (gemäss V. Schauberger, gemäss Ranque und Hilsch). Allein dadurch wird das Wasser weniger erwärmt, und dadurch entstehen z.B. weniger Kalkausfällungen. Die kinetische Energie des nicht mehr laminar strömenden Wassers ist notwendig, um die nachher aufgebrachten Schwingungen zu verstärken. Der Zweck ist nicht wie bei Permanentmagneten eine Schneidung der Magnetfeldlinien.

Als zweites lässt man das Wasser durch ein elektro-magnetisches Feld fliessen, welches möglichst viele verschiedene Frequenzen enthält. Dies ist notwendig, da das Wasser und seine Clusterstrukturen nicht eine bestimmte Eigenfrequenz besitzen, sondern unzählig viele. So werden möglichst viele Clusterstrukturen aufgebrochen, Informationen gelöscht und Schwebteile (Kristallkeimbildungszentren) freigesetzt. Das Signal ist idealerweise rechteckförmig, ein übersteuerter Akkord oder trapezförmig mit möglichst steilen Flanken (dem Rechteck angenähert). Mit diesen Signalformen erhält man abrupte Spannungswechsel, welche optimale Magnetfelder erzeugen. Das Wasser reagiert auf die elektro-magnetischen Felder, weil die Moleküle Dipole sind, also wie Magnete eine unterschiedliche Ladungsverteilung aufweisen.

Um das Wasser zu harmonisieren, wird optional mit harmonisch abgestimmten Frequenzen, z.B. im Verhältnis Terz oder Quint, gearbeitet. Dies geschieht über die Induktionsspule oder, was aufwendiger ist, als metallische, kristalline oder akustische Schwingung übertragen.

Durch das Verfahren werden die Moleküle, also die Cluster neu geordnet, und zwar werden diese kleiner und besser strukturiert. Die innere Bindung der Moleküle nimmt zu, die Oberflächenspannung des Wassers generell auch. Es werden Schwebstoffe im Wasser freigesetzt, welche vorher durch die Wassermoleküle umhüllt waren. So entstehen Kristallkeimbildungszentren für die Kalk-lonen. Das Stoffwechsel in Pflanzen und Lebewesen wird verbessert, die Wirkung von vielen Chemikalien wird erhöht, im speziellen von Seifen, Nährstoffen, Pestiziden, Betonzusatzmitteln etc.

Im Unterschied zu bekannten Verfahren und Patenten wird hier die Erkenntnis berücksichtigt, dass all diese Effekte mit einem magnetischen Impuls allein nicht möglich sind (oder wenigstens nicht effizient), sondern dass noch zusätzliche Energie zur Verfügung stehen muss. Diese wird durch die verursachte Verwirbelung (Turbulenz) zur Verfügung gestellt. Ein weiterer Unterschied ist, dass Harmonien, übersteuerte Frequenzen oder Rechteckfrequenzen aus dem Grund benutzt werden, um möglichst viele Frequenzen auf die Molekülstrukturen einwirken zu lassen und eine optimierte magnetische Wirkung erhalten, dies vor allem auch durch die abrupten Spannungswechsel. Im speziellen wirksam ist eine Kombination aus pulsierendem Gleichstrom, welcher einerseits ein in Fliessrichtung des Mediums gerichtetes Nord-Süd Magnetfeld aufbaut, andererseits überlagert eine rhythmische Pulsierung in derselben Ausrichtung produziert. Neu ist auch, dass diese mittels Induktionsspulen genauso übertragen werden können, wie mittels akustischen Signalen.

### Aufzählung der Zeichnungen

### 1. Darstellung des Anlagekonzepts, Grundprinzip

### 2. Darstellung eines Verwirbelungsteils

### Ausführung der Erfindung

Die Erfindung besteht zum einem Teil in der dargestellten neuartigen Kombination von bekannten und unbekannten physikalischen Phänomenen, zum anderen in der Möglichkeit, bestehende PWB in ihrer Wirkung zu verbessern. Eine einfache Ausführung wird folgendermassen durchgeführt: Einbau eines Durchflussteils (1) in die Leitung. Dieser Teil enthält in Durchflussrichtung (8) gesehen zuerst einen Verwirbelungsteil gemäss Zeichnung 2. Anschliessend folgen 2 Spulen (3 und 4). Diese werden durch einen elektronischen Teil (5) mit Impulsen (6 und 7) gespeist. Der Nachweis von PWB und ihrer Effizienz ist einfach, und kann z.B. mittels Kristallbildern von verdunsteten Tropfen (gemäss Dr. Kronenberg) nachgewiesen werden. Es gibt Verfahren, welche die Wirkung noch schöner belegen, z.B. die Tropfenbildmethode nach Schwenk oder die Elektro-Chemie-Luminiszenz nach Prof. Popp.

## Patentansprüche

1. Physikalisches Behandlungsverfahren für Wasser. Auf das in einer Leitung fliessende Wasser wird folgendermassen eingewirkt: einerseits durch Aenderung der Bewegungsrichtung des Wassers (2) und andererseits durch eine oder mehrere parallel zur Fliessrichtung angebrachten Induktionsspule(n)(3 und 4), mit denen die Schwingungen auf das Wasser übertragen werden.

2. Verfahren nach Anspruch 1, dadurch gekennzeichnet, dass anstatt Wasser auch andere Flüssigkeiten oder Gase mit diesem Verfahren bearbeitet und genutzt werden können.

3. Verfahren nach Anspruch 1 oder 2, dadurch gekennzeichnet, dass dafür ein kompaktes Gerät zum Einbau in die Mediumleitung hergestellt und genutzt wird.

4. Verfahren nach Anspruch 1 oder 2, dadurch gekennzeichnet, dass ein oder mehrere Bauteile, welche aussen auf die Leitung aufgebracht, oder in das Leitungsinnere eingefügt werden, dafür hergestellt und genutzt werden.

5. Verfahren nach den Ansprüchen 1 bis 4, dadurch gekennzeichnet, dass die Verwirbelung möglichst nahe an die Spiralbewegung im hyperbolischen Kegel gemäss den mathematischen Grundlagen von Walter Schauberger angenähert wird.

6. Verfahren nach den Ansprüchen 1 bis 5 , dadurch gekennzeichnet, dass die Verwirbelung durch ein flaches Metall- oder Kunststoffteil, welches gezielt geschnitten und geformt wird (Zeichnung 2 als Beispiel), erreicht wird.

7. Verfahren nach den Ansprüchen 1 bis 5, dadurch gekennzeichnet, dass die Verwirbelung durch eine gepresste oder gegossene Form erzielt wird.

8. Verfahren nach den Ansprüchen 1 bis 4 , dadurch gekennzeichnet, dass die in den Spulen verwendeten Frequenzen im Bereich der Frequenzen des hörbaren Schallspektrums liegen (ca. 16 Hz bis 20'000 Hz).

9. Verfahren nach Anspruch 8, dadurch gekennzeichnet, dass die Frequenzen harmonisch kombiniert werden.

10. Verfahren nach Anspruch 9, dadurch gekennzeichnet, dass der Akkord ein F-Dur-Akkord sein kann.

11. Verfahren nach den Ansprüchen 8 und 9, dadurch gekennzeichnet, dass die Frequenzen und Akkorde auch übersteuert (verzerrt) werden können.

12. Verfahren nach den Ansprüchen 1 bis 4 und 9 bis 11, dadurch gekennzeichnet, dass sowohl Gleichstrom als auch Wechselstrom verwendet werden kann.

13. Verfahren nach den Ansprüchen 1 bis 4 und 9 bis 12, dadurch gekennzeichnet, dass im speziellen ein pulsierender Gleichstrom verwendet wird.

14. Verfahren nach den Ansprüchen 1 bis 4 und 9 bis 13, dadurch gekennzeichnet, dass ein modulares System solcherart verwendet wird, dass Standard-Durchflusskörper-Module mittels Verzweigungen kombiniert werden, wobei die Anzahl Module der gewünschten Durchflussmenge angepasst werden.
